# EUROPÄISCHE PATENTSCHRIFT

(11) **EP 4 136 017 B1**
(45) Veröffentlichungstag und Bekanntmachung des Hinweises auf die Patenterteilung: **01.04.2026**
(21) Anmeldenummer: 21720214.2
(22) Anmeldetag: 15.04.2021
(51) Int. Cl.: B62M 6/90, B62J 43/28, B62M 6/55, B62K 19/30, B62K 19/00

(54) **VERSTEIFUNGSEINRICHTUNG ZUR VERSTEIFUNG EINES FAHRRADRAHMENS UND FAHRRADRAHMEN MIT VERSTEIFUNGSEINRICHTUNG**
STIFFENING DEVICE FOR STIFFENING A BICYCLE FRAME AND BICYCLE FRAME WITH STIFFENING DEVICE
DISPOSITIF DE RAIDISSEMENT POUR RIGIDIFIER UN CADRE DE BICYCLETTE ET CADRE DE BICYCLETTE AVEC DISPOSITIF DE RAIDISSEMENT

(30) Priorität: 17.04.2020 DE 202020102128 U
(43) Veröffentlichungstag der Anmeldung: 22.02.2023
(73) Patentinhaber: SRAM, LLC, Chicago, IL 60607 (US)
(72) Erfinder: SCHAEFER, Jonni, 30419 Hannover (DE); WURMBÄCK, Christian, 41460 Neuss (DE)
(74) Vertreter: terpatent PartGmbB
(86) Internationale Anmeldenummer: PCT/EP2021/059835
(87) Internationale Veröffentlichungsnummer: WO 2021/209572

(56) Entgegenhaltungen:
- EP-A1- 2 998 213
- EP-A1- 3 653 481
- WO-A1-2019/167732
- CN-A- 109 319 035
- CN-A- 110 690 385
- CN-U- 206 856 919
- DE-A1- 102013 108 313
- DE-U1- 202007 006 211

## Beschreibung

Die Erfindung betrifft einen Fahrradrahmen mit einer Versteifungseinrichtung zur Versteifung eines Elektrofahrrad-Fahrradrahmens im Bereich eines einen Energiespeicher aufnehmenden Ausschnitts.

Bei Elektrofahrrädern wird der elektrische Energiespeicher anstatt, wie bisher üblich, auf ein Rahmenrohr aufgesetzt, immer häufiger in ein Fahrradrahmen-Rohr integriert. Den damit verbundenen optischen Vorteil stehen ein erhöhter Fertigungs- und damit verbundener Kostenaufwand sowie besondere Anforderungen hinsichtlich einer ausreichenden Rohrsteifigkeit in diesem Bereich entgegen. Der erhöhte Aufwand hinsichtlich einer ausreichenden Rahmensteifigkeit resultiert daraus, dass zur Integration der Versorgungseinheit in das Rahmenrohr ein Bereich des Rahmenrohrs mit einem strukturschwächenden Ausschnitt versehen werden muss, der eine Öffnung bildet, durch die der elektrische Energiespeicher, beispielsweise zum Aufladen, aus dem Rahmenrohr entnommen bzw. in das Rahmenrohr wieder eingesetzt werden kann.

Aus DE 10 2017 200 829 A1 ist es bekannt, zur Herstellung der erforderlichen Rahmensteifigkeit das Fahrradrahmen-Rohr wenigstens im Bereich des Öffnungs-Ausschnitts mit einzelnen Versteifungsrippen, Versteifungsstegen und dergleichen zu versehen, die mit der betreffenden Rohrwand beispielsweise stoffschlüssig verschweißt werden. Hierdurch sind die Herstellungskosten erheblich. Der erhöhte Fertigungsaufwand resultiert unter anderem auch aus einer schlechten Zugänglichkeit des Einbauraums innerhalb des Rahmenrohrs, so dass die Fertigungsschritte kompliziert und zeitaufwändig durchgeführt werden müssen.

EP 2 998 213 A1 offenbart einen gattungsgemäßen Fahrradrahmen mit einer im Querschnitt als Profilkörper ausgebildeten Versteifungseinrichtung.

Aus WO 2019/167732 A1 ist ein ähnliches Fahrradrahmen-Rohr bekannt. Aus CN 110690385 A ist ein Fahrradrahmen-Rohr bekannt, in dem auf zwei proximalen Halteleisten eine Montageplattform fixiert ist.

Aufgabe der Erfindung ist es, einen versteiften Fahrradrahmen mit einer vereinfachten und preiswerten Versteifung des Fahrradrahmen-Rohrs zur Verfügung zu stellen.

Diese Aufgabe wird erfindungsgemäß gelöst mit einem Fahrradrahmen mit einer Versteifungseinrichtung mit den Merkmalen des Anspruchs 1.

Die erfindungsgemäße Versteifungseinrichtung ist ein eigenständig vorproduziertes modulares Bauelement, das in ein Rohr eines Fahrradrahmens einbaubar ist. Die Versteifungseinrichtung weist ein sich in dem Rohr axial erstreckendes erstes lineares Versteifungselement und/oder in einem bestimmten Winkel dazu mindestens ein sich ebenfalls in dem Rohr axial erstreckendes zweites lineares Versteifungselement auf. Die erfindungsgemäße Versteifungseinrichtung wird separat vom Fahrradrahmen gefertigt und lässt sich anschließend in verschiedene Rahmenformen montieren. Durch die winklige Anordnung des ersten und zweiten Versteifungselements lässt sich eine ausreichende Versteifung der Versteigungseinrichtung und somit des Fahrradrahmens wenigstens im Bereich eines Öffnungs-Ausschnitts, der im Fahrradrahmen-Rohr zur Montage eines Energiespeichers vorgesehenen ist, realisieren. Die Versteifungseinrichtung kann die Länge des Ausschnitts aufweisen oder länger als der Ausschnitt sein. Die Länge der Versteifungseinrichtung kann auch der Länge des gesamten betreffenden Fahrradrahmen-Rohrs entsprechen.

Unter einem ersten bzw. zweiten Versteifungselement ist vorliegend ein mehr oder weniger flächiges bzw. stegartiges Element zu verstehen, das jedoch nicht grundsätzlich eben ausgebildet ist, sondern auch leicht gewölbt und/oder im Querschnitt keilförmig ausgebildet sein kann. Das erste und das zweite Versteifungselement stehen in einem von beiden eingeschlossenen Winkel von mindestens 45° zueinander, so dass auf diese Weise das Flächenträgheitsmoment des Versteifungselements bezüglich einer Längsbiegung, Querbiegung und/oder Torsion insbesondere im in den Fahrradrahmen-Rohr eingebauten Zustand und in Zusammenwirkung mit dem Fahrradrahmen-Rohr hoch ist. Das zweite Versteifungselement ragt bevorzugt mindestens um 5 mm, besonders bevorzugt um mindestens 8 mm von dem ersten Versteifungselement ab.

Besonders bevorzugt ist die gesamte Versteifungseinrichtung aus einem geeigneten Metall bestehend und vollständig einstückig ausgebildet, also auch frei von Verschweißungen.

Die Erfindung betrifft einen Fahrradrahmen für ein Elektrofahrrad, der in einem Unterrohr oder in einem Sattelrohr die Versteifungseinrichtung aufweist. Die Versteifungseinrichtung ist im Wesentlichen über ihre gesamte Länge mit der angrenzenden Rohrwand verbunden, jedoch nicht notwendigerweise über die gesamte axiale Länge ununterbrochen mit der Rohrwand verbunden. Die Versteifungseinrichtung ist in mindestens zwei axialen und zueinander parallelen Spuren mit der angrenzenden Rohrwand verbunden. Hierdurch wird der betreffende Rohrabschnitt insbesondere auch in Bezug auf Torsion versteift.

Die Versteifungseinrichtung ist vorzugsweise im Wesentlichen kraftschlüssig und/oder formschlüssig mit der Rohrwand des betreffenden Fahrradrahmen-Rohrs verbunden, beispielsweise durch eine Vielzahl punktueller Schraubverbindungen. Die Versteifungseinrichtung kann zusätzlich bzw. ergänzend auch noch stoffschlüssig mit der Rohrwand verbunden sein, beispielsweise durch punktuelle Verschweißung. Der Formschluss bzw. Kraftschluss zwischen dem Fahrradrahmen-Rohr und der Versteifungseinrichtung vermeidet vollständig oder verringert erheblich den Aufwand für die mechanische Verbindung der Versteifungseinrichtung mit der angrenzenden Rohrwand.

Im Unterrohr oder im Sattelrohr sind zwei einander gegenüberliegende Sockel vorgesehen. Unter "gegenüberliegend" ist vorliegend zu verstehen, dass die beiden Sockel beispielsweise spiegelsymmetrisch zu einer axialen Vertikalebene einander gegenüberliegen. Die Sockel können stegartig ausgebildet sein und von der Rohrwand mit einer radialen Komponente in den Rohr-Innenraum hineinragen.

Die Sockel bzw. Sockelstege können sich über einen Teil oder die gesamte Länge des betreffenden Sattelrohrs oder Unterrohrs erstrecken. Die beiden Sockel versteifen das Unterrohr oder Sattelrohr zusätzlich, und nehmen die Versteifungseinrichtung formschlüssig auf und/oder dienen als Vollmaterial für Bohrungen oder Gewindebohrungen, in die korrespondierende Bolzen oder Gewindeschrauben zur Fixierung der Versteifungsvorrichtung eingesteckt bzw. eingeschraubt sind.

In die Sockel können Bohrungen und/oder axial verlaufende Nuten eingearbeitet sein. Die Bohrungen können mit einem Gewinde versehen sein, so dass Schrauben zur Befestigung der Versteifungseinrichtung im Unterrohr oder im Sattelrohr in die Bohrungen eingeschraubt werden können. Die Bohrungen, die Durchgangsbohrungen sein können, können nach dem Einschraubvorgang von außen verschlossen werden, beispielsweise mit einem Kitt. In die Nuten können gewindeschneidende Schrauben eingedreht werden, sodass die separate Herstellung eines Innengewindes entfallen kann.

Im Unterrohr oder im Sattelrohr können Längslöcher vorgesehen sein, um die Versteifungseinrichtung mit dem Unterrohr oder dem Sattelrohr vorzugsweise von außen zu verschweißen.

Das Unterrohr oder das Sattelrohr kann ein Strangpressprofil sein, das für alle Rahmenformen verwendbar ist.

Unter der axialen Richtung ist vorliegend stets, bei in das Fahrradrahmen-Rohr eingebauter Versteifungseinrichtung, die Längsrichtung des betreffenden Fahrradrahmen-Rohrs zu verstehen. Die Versteifungseinrichtung ist in axialer Richtung linear langgestreckt ausgebildet.

Das erste Versteifungselement, beispielsweise die Grundplatte des langgestreckten Versteifungselements, kann mehrere Durchbrüche und/oder Ausnehmungen aufweisen. Die Durchbrüche können geschlossen umlaufende Ränder aufweisen, wohingegen die Ränder der Ausnehmungen in die beiden einander gegenüberliegenden Seitenränder des ersten Versteifungselements übergehen. Die Durchbrüche und Ausnehmungen dienen zum einen der Gewichtsersparnis und zum anderen ermöglichen sie es, dass bei der Fahrradrahmen-Montage unterhalb bzw. distal des ersten Versteifungselements hantiert werden kann, um beispielsweise ein oder mehrere Kabel unter dem Versteifungselement bzw. zwischen dem Versteifungselement und der angrenzenden Rohrwand hindurchzuziehen.

Zur leichten Herstellbarkeit können die Durchbrüche rechteckförmig, wabenförmig oder rautenähnlich ausgebildet sein, wobei die rautenähnlichen Durchbrüche vier geradlinig verlaufende Ränder aufweisen, wobei die einander gegenüberliegenden Ränder parallel verlaufen und zwischen zwei geradlinig verlaufenden Rändern bogenförmige Ränder angeordnet sind. Die Ausnehmungen können V-förmig ausgebildet sein.

Damit die Versteifungseinrichtung trotz der Durchbrüche und/oder Ausnehmungen eine hohe Steifigkeit aufweist, können die Durchbrüche und die Ausnehmungen in axialer Längsrichtung des ersten Versteifungselements versetzt zueinander angeordnet sein.

Das erste Versteifungselement kann eine mit den Durchbrüchen versehene Grundplatte aufweisen, an die sich mit einem ersten Neigungswinkel schräg zur Grundplatte verlaufende Übergangsbereiche anschließen, die in Randabschnitte übergehen, die einen zweiten Neigungswinkel, der geringer als der erste Neigungswinkel ist, aufweisen. Somit erhält das erste Versteifungselement einen wannenähnlichen Querschnitt, der ein Aufnahmebett für einen Energiespeicher bildet.

Mehrere zweite Versteifungselemente können im Rohr als axial beabstandete hintereinander angeordnete Leisten ausgestaltet sein. Somit kann auf konstruktiv einfache und kostengünstige Weise die Steifigkeit der Versteifungseinrichtung erhöht werden.

Aus demselben Grund können die mehreren im Rohr axial beabstandeten hintereinander angeordneten Leisten nebeneinander verlaufende Leistenreihen bilden. Die nebeneinander verlaufenden Leistenreihen können vorzugsweise parallel zueinander angeordnet sein.

In einer sehr einfachen Ausführungsform kann die Versteifungseinrichtung ein mehrere Löcher aufweisendes Metallblech sein.

Um eine hohe Steifigkeit zu erreichen, kann die Versteifungseinrichtung aus einem Metallwerkstoff gefertigt sein. Ein kohlenstofffaserverstärkter Kunststoff ist empfehlenswert, wenn außer der hohen Steifigkeit auch ein geringes Gewicht für die Versteifungseinrichtung gefordert ist. Ein glasfaserverstärkter Kunststoff kann bei geringeren Anforderungen an die ausreichende Steifigkeit gewählt werden.

Nachfolgend werden Ausführungsbeispiele der Erfindungen anhand der beiliegenden Zeichnungen näher erläutert. Im Einzelnen zeigen:
- Fig. 1: eine Seitenansicht auf ein Elektrofahrrad mit einer ersten Ausführungsform eines Fahrradrahmens;
- Fig. 2: eine Seitenansicht auf eine zweite Ausführungsform des Fahrradrahmens;
- Fig. 3: eine Ansicht von unten auf den Fahrradrahmen der Fig. 2 mit einer erfindungsgemäßen Versteifungseinrichtung;
- Fig. 4: eine perspektivische Vorderansicht auf die Versteifungseinrichtung der Figur 3;
- Fig. 5: eine Draufsicht auf die Versteifungseinrichtung der Figuren 3 und 4;
- Fig. 6: eine perspektivische Seitenansicht auf die Versteifungseinrichtung der Figuren 3-5;
- Fig. 7: eine Vorderansicht auf die Versteifungseinrichtung der Figuren 3-6;
- Fig. 8: eine perspektivische Vorderansicht bzw. eines perspektivischen Querschnitts einer ersten Ausführungsform eines Rohres des Fahrradrahmens der Figuren 1-3;
- Fig. 9: eine perspektivische Ansicht auf die mit einem Ausschnitt versehene erste Ausführungsform des Rohres der Fig. 8 und die Versteifungseinrichtung vor einer Montage;
- Fig. 10: eine perspektivische Ansicht auf eine zweite Ausführungsform eines Rohres des Fahrradrahmens der Figuren 1-3, die nicht in den Schutzbereich der Patentansprüche fällt, und die Versteifungseinrichtung vor einer Montage; und
- Fig. 11: eine perspektivische Ansicht auf das Rohr und die Versteifungseinrichtung der Fig. 10 nach der Montage.

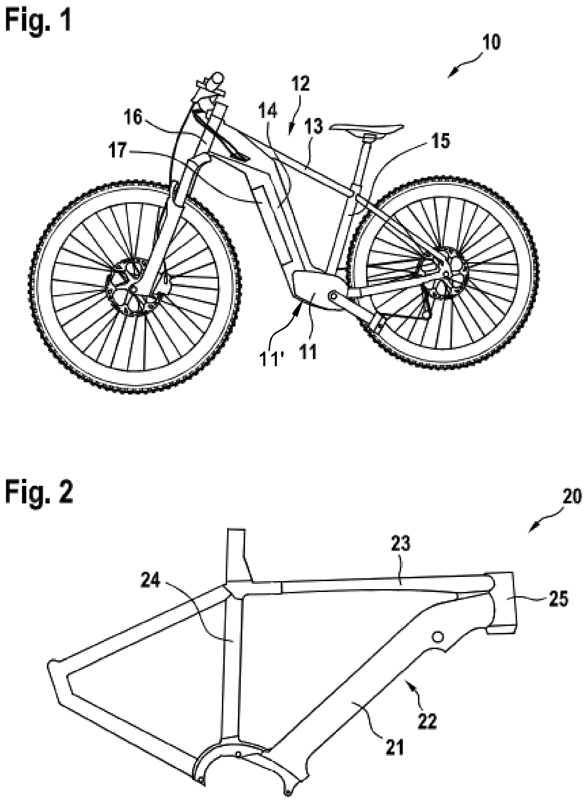

Fig. 1 zeigt ein Elektrofahrrad 10 mit einem Elektromotor 11', der hinter einer Abdeckung 11 montiert ist. Das Elektrofahrrad 10 weist einen Fahrradrahmen 12 mit einem Oberrohr 13, einem Unterrohr 14, einem Sattelrohr 15 und einem Steuerrohr 16 auf.

Unterhalb des Unterrohrs 14 bzw. von unten aus in dem Unterrohr 14 zugänglich ist ein elektrischer Energiespeicher 17 angeordnet. Der Energiespeicher 17, der vorzugsweise ein aufladbarer Akku ist, versorgt den Elektromotor 11' während des Fahrbetriebs mit elektrischer Energie.

Der Energiespeicher 17 ist lösbar im Fahrradrahmen 12 montiert. Er kann deshalb im Bedarfsfall, beispielsweise zum Aufladen, zum Schutz vor Diebstahl, zu Wartungszwecken oder zum Austausch bei Verschleiß vom Fahrradrahmen 12 entnommen und später wieder daran angebracht werden.

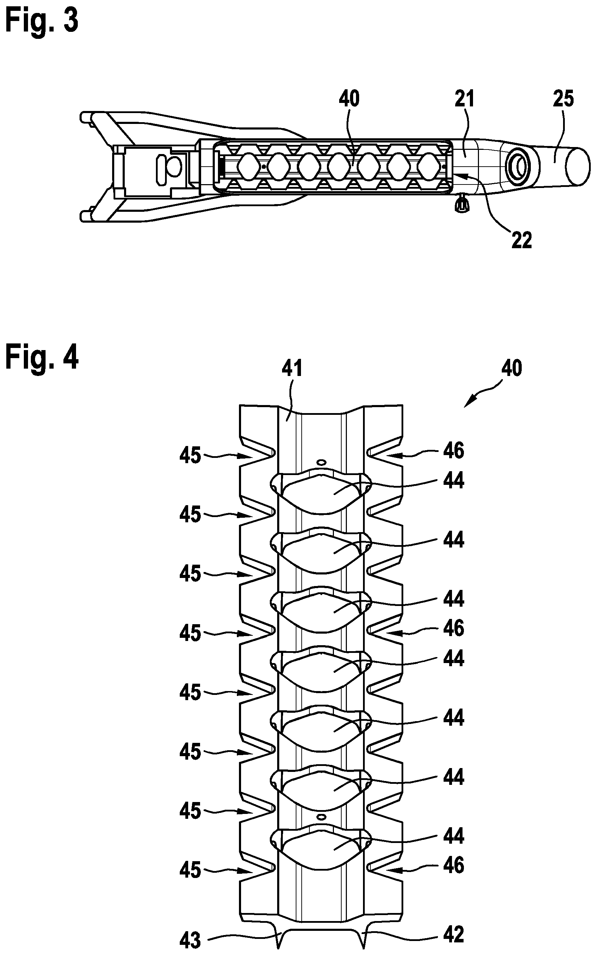

Fign. 2 und 3 zeigen einen Fahrradrahmen 20 mit einem Unterrohr 21, in welches ein Ausschnitt 22 zur Aufnahme des hier nicht näher dargestellten elektrischen Energiespeichers vorgesehen ist. Ferner weist der Fahrradrahmen 20 ein Oberrohr 23, ein Sattelrohr 24 und ein Steuerrohr 25 auf. Im Unterrohr 21 ist eine Versteifungseinrichtung 40 montiert (siehe Fign. 3 bis 7).

Die Versteifungseinrichtung 40 weist ein sich im Unterrohr 21 axial erstreckendes erstes Versteifungselement 41 und im rechten Winkel dazu zwei sich ebenfalls im Unterrohr 21 axial erstreckende zweite Versteifungselemente 42 und 43 auf. Das erste Versteifungselement 41 ist mit mehreren Durchbrüchen 44 und Ausnehmungen 45 und 46 versehen. Die Durchbrüche 44 und die Ausnehmungen 45 und 46 ermöglichen es, unterhalb der Versteifungseinrichtung 40 ein oder mehrere Kabel hindurch zu ziehen. Ferner dienen die Durchbrüche 44 und die Ausnehmungen 45 und 46 der Gewichtsersparnis.

Die Durchbrüche 44 weisen geschlossen umlaufende Ränder auf. Die Durchbrüche 44 weisen vier geradlinig verlaufende Ränder auf, wobei die einander gegenüberliegenden Ränder parallel zueinander verlaufen. Zwischen zwei geradlinig verlaufenden Rändern befinden sich bogenförmige Ränder. Somit weisen die Durchbrüche 44 eine rautenähnliche Form auf.

Die Ausnehmungen 45 und 46 sind V-förmig ausgestaltet. Ihre Ränder gehen in die beiden einander gegenüberliegenden Seitenränder des ersten Versteifungselements 41 über, so dass die Ausnehmungen 45 und 46 die Seitenränder unterbrechen.

Die Durchbrüche 44 und die Ausnehmungen 45 und 46 sind in axialer Längsrichtung des Versteifungselements 40 versetzt zueinander angeordnet, wodurch eine möglichst hohe Steifigkeit erreicht wird.

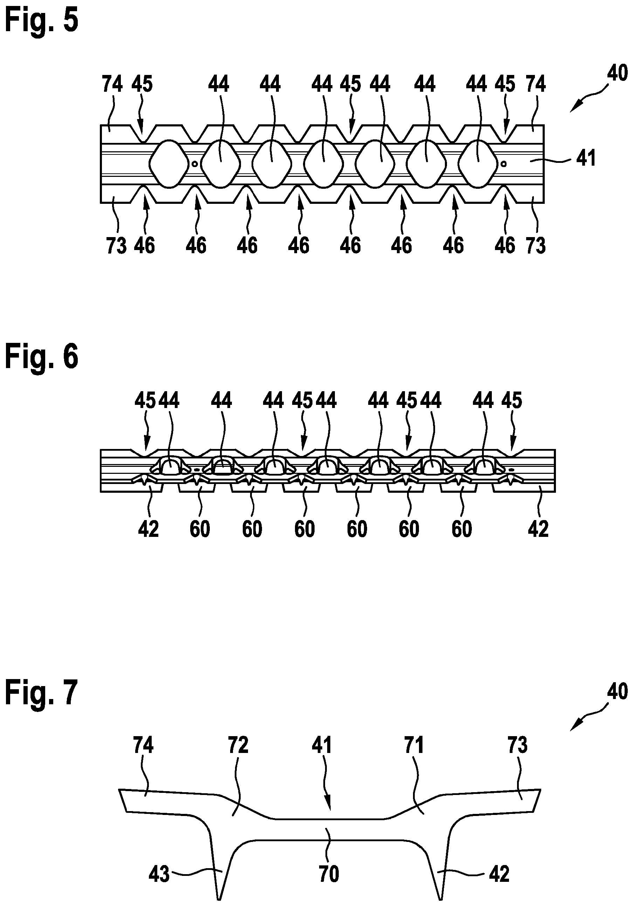

Das erste Versteifungselement 41 weist eine Grundplatte 70 auf, an welche sich einen ersten Neigungswinkel aufweisende schräg verlaufende Übergangsbereiche 71 und 72 anschließen (siehe Fig. 7). Die Übergangsbereiche 71 und 72 gehen in Randabschnitte 73 und 74 über, die einen zweiten Neigungswinkel aufweisen, der geringer als der erste Neigungswinkel ist. Folglich weist das erste Versteifungselement 41 einen wannenähnlichen Querschnitt auf, der ein Aufnahmebett für den Energiespeicher bildet. Den Randabschnitten 73 und 74 folgen weitere aus Gründen der Übersichtlichkeit nicht mit weiteren Bezugszeichen versehene Randabschnitte (siehe Fig. 5).

Zwei zweite Versteifungselemente 42 und weitere zweite Versteifungselemente 60 sind jeweils als Leisten ausgebildet, die axial beabstandet hintereinander angeordnet sind (siehe Fig. 6). Die Versteifungselemente 42 und 60 befinden sich unterhalb der Ausnehmungen 46, so dass die Versteifungselemente 42 und 60 die Steifigkeit der Versteifungseinrichtung erhöhen (siehe Fign. 5 und 6). Die Versteifungselemente 42 und 60 bilden eine erste Leistenreihe. Auf der gegenüberliegenden Seite befinden sich hier nicht erkennbar ebenfalls mehrere axial beabstandet hintereinander angeordnete zweite Versteifungselemente, die unterhalb der Ausnehmungen 45 platziert sind und somit eine zweite Leistenreihe, die parallel zu der ersten Leistenreihe verläuft, bilden.

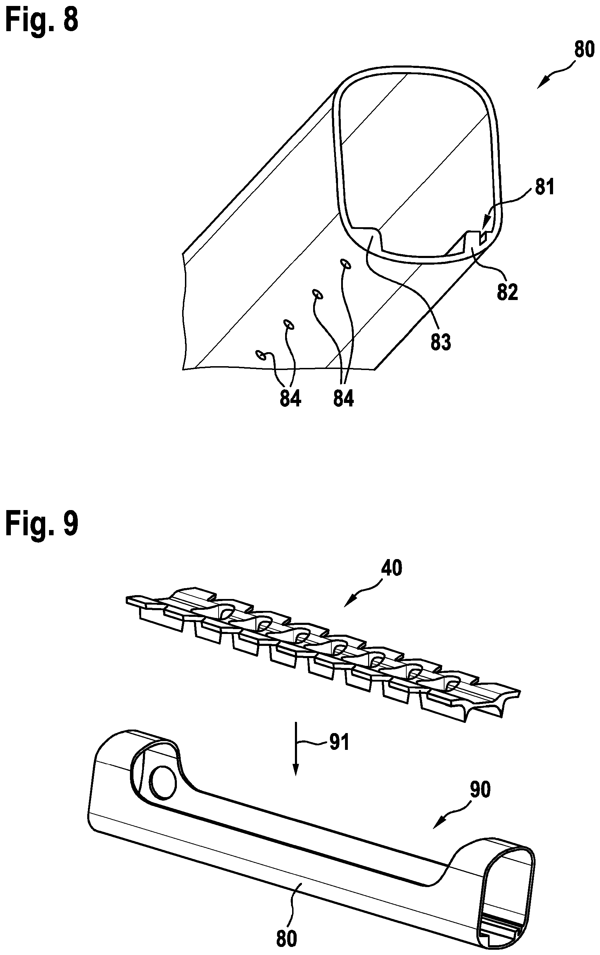

Fig. 8 zeigt ein Rohr 80, welches vorzugsweise ein Unterrohr oder ein Sattelrohr sein kann und zur Aufnahme der Versteifungseinrichtung 40 vorgesehen ist.

In dem Rohr 80 ist ein eine axial verlaufende Nut 81 aufweisender erster Sockel 82 angeordnet. Spiegelsymmetrisch gegenüber davon befindet sich ein zweiter Sockel 83, in den ein Gewinde aufweisende Bohrungen 84 eingebracht sind. Auf die Sockel 82 und 83 kann bei der Montage die Versteifungseinrichtung 40 aufgelegt werden. Die Versteifungseinrichtung 40 kann mit dem Rohr 80 verschraubt werden. Zu diesem Zweck können in die Nut 81 gewindeschneidende Schrauben eingeschraubt werden. Die Bohrungen 84 können jeweils ein Innengewinde aufweisen, in welche Schrauben zur Befestigung der Versteifungseinrichtung 40 mit dem Rohr 80 eingeschraubt werden können. Die unterschiedlichen Sockel 82 und 83 in dem Rohr 80 dienen in Fig. 8 der Illustration der beiden Verschraubungsalternativen. Üblicherweise weist das Rohr 80 zwei Sockel 82 mit der Nut 81 oder zwei Sockel 83 mit den Bohrungen 84 auf.

Vor dem Einbringen der Versteifungseinrichtung 40 in das Rohr 80 wird das Rohr 80 mit einem Ausschnitt 90 versehen. Anschließend wird die Versteifungseinrichtung 40 in Richtung eines Pfeiles 91 in das Rohr 80 eingesetzt (siehe Fig. 9). Die Versteifungseinrichtung 40 wird mit dem Rohr 80 verschraubt, wenn die Versteifungseinrichtung 40 aus einem kohlenstofffaserverstärkten oder glasfaserverstärkten Kunststoff hergestellt ist. Sie ist aber auch möglich, wenn die Versteifungseinrichtung 40 aus einem Metallwerkstoff gefertigt ist.

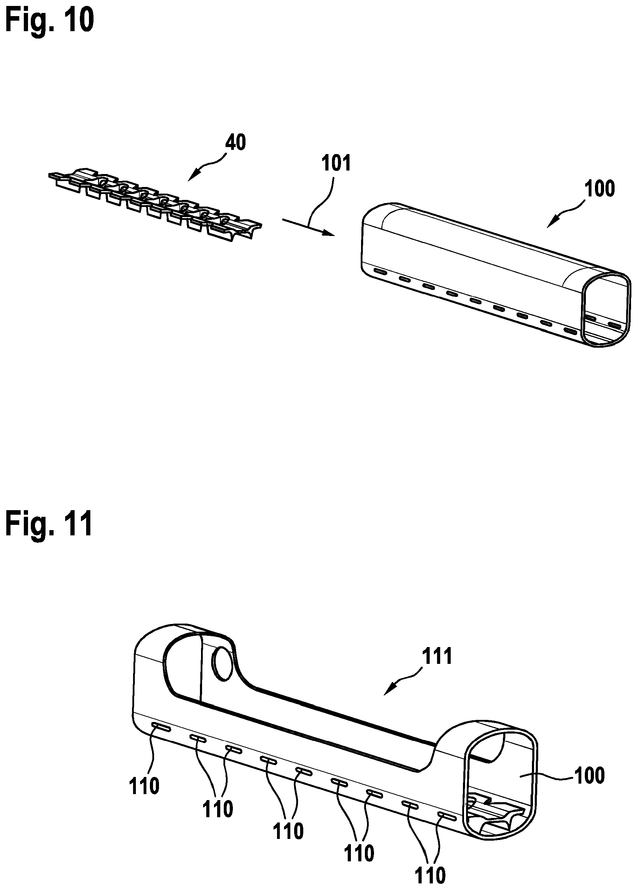

Wenn die Versteifungseinrichtung 40 aus dem Metallwerkstoff gefertigt ist, kann sie alternativ zur Verschraubung mit einem Rohr 100 verschweißt werden (siehe Fign. 10 und 11). Zu diesem Zweck befinden sich in dem Rohr 100 Längslöcher 110, durch welche die Randabschnitte 73 und 74 und die übrigen Randabschnitte mit dem Rohr 100 verschweißt werden können. Vor dem Verschweißen kann die Versteifungseinrichtung 40 axial in Richtung eines Pfeiles 101 in das Rohr 100 eingeführt (siehe Fig. 10) und anschließend von außen mit dem Rohr verschweißt werden. Damit sich das Rohr 100 beim Verschweißen nicht verziehen kann, wird es erst nach dem Schweißvorgang mit einem Ausschnitt 111 versehen. Alternativ zu diesem Fertigungsablauf kann das Rohr 100 aber auch zuerst mit dem Ausschnitt 111 versehen werden, dann in das Rohr 100 eingeführt und anschließend mit dem Rohr 100 von innen oder von außen verschweißt werden.

Nachdem die Versteifungseinrichtung 40 mit dem Rohr 100 verschweißt worden ist, wird das Rohr 100, welches ein Strangpressprofil ist, in den Fahrradrahmen eingeschweißt.

### Bezugszeichen

- 10: Elektrofahrrad
- 11: Abdeckung
- 11': Elektromotor
- 12: Fahrradrahmen
- 13: Oberrohr
- 14: Unterrohr
- 15: Sattelrohr
- 16: Steuerrohr
- 17: Energiespeicher

- 20: Fahrradrahmen
- 21: Unterrohr
- 22: Ausschnitt
- 23: Oberrohr
- 24: Sattelrohr
- 25: Steuerrohr

- 40: Versteifungseinrichtung
- 41: Versteifungselement
- 42: Versteifungselement
- 43: Versteifungselement
- 44: Durchbruch
- 45: Ausnehmung
- 46: Ausnehmung

- 60: Versteifungselement

- 70: Grundplatte
- 71: Übergangsbereich
- 72: Übergangsbereich
- 73: Randabschnitt
- 74: Randabschnitt

- 80: Rohr
- 81: Nut
- 82: Sockel
- 83: Sockel
- 84: Bohrung

- 90: Ausschnitt
- 91: Pfeil

- 100: Rohr
- 101: Pfeil

- 110: Längsloch
- 111: Ausschnitt

## Patentansprüche

1. Fahrradrahmen (12, 20) für ein Elektrofahrrad (10),
mit einem Unterrohr (14, 21) und einem Sattelrohr (15, 24),
wobei der Fahrradrahmen (12) in dem Unterrohr (14, 21) oder in dem Sattelrohr (15, 24) eine separate einstückige Versteifungseinrichtung (40) aufweist, die der Versteifung des Elektrofahrrad-Fahrradrahmens (12, 20) wenigstens im Bereich eines einen Energiespeicher (17) aufnehmenden Rohr-Ausschnitts (22, 90) eines Fahrradrahmen-Rohrs (80) dient,
wobei die Versteifungseinrichtung (40) in das Rohr (80) des Fahrradrahmens (12, 20) eingebaut ist und ein sich in dem Rohr (80) axial erstreckendes erstes Versteifungselement (41) und in einem bestimmten Winkel dazu mindestens ein sich ebenfalls in dem Rohr (80;100) axial erstreckendes zweites Versteifungselement (42, 43) aufweist,
wobei in dem Rohr (80) des Unterrohrs (14, 21) oder des Sattelrohrs (15, 24) zwei einander gegenüberliegende Sockel (82, 83) vorgesehen sind, **dadurch gekennzeichnet, dass**
die Versteifungseinrichtung (40) in zwei axialen und zueinander parallelen Spuren mit den Sockeln (82, 83) mit der angrenzenden Rohrwand des Rohres (80) und im Wesentlichen über die gesamte Länge der Versteifungseinrichtung (40) verbunden ist.

2. Fahrradrahmen (12, 20) nach Anspruch 1, wobei in die Sockel (83, 82) Bohrungen (84) und/oder axial verlaufende Nuten (81) eingebracht sind.

3. Fahrradrahmen (12, 20) nach einem der vorangegangenen Ansprüche, wobei im Unterrohr (14, 21) oder im Sattelrohr (15, 24) Längslöcher (110) vorgesehen sind.

4. Fahrradrahmen (12, 20) nach einem der vorangegangenen Ansprüche, wobei das erste Versteifungselement (41) mehrere Durchbrüche (44) und/oder Ausnehmungen (45, 46) aufweist.

5. Fahrradrahmen (12, 20) nach Anspruch 4, wobei die Durchbrüche (44) rechteckförmig, wabenförmig oder rautenähnlich ausgebildet sind, wobei die rautenähnlichen Durchbrüche (44) vier geradlinig verlaufende Ränder aufweisen und zwischen zwei geradlinig verlaufenden Rändern bogenförmige Ränder angeordnet sind.

6. Fahrradrahmen (12, 20) nach Anspruch 4 oder 5, wobei die Durchbrüche (44) und die Ausnehmungen (45, 46) in Längsrichtung des ersten Versteifungselements (41) versetzt zueinander angeordnet sind.

7. Fahrradrahmen (12, 20) nach einem der Ansprüche 4 bis 6, wobei das erste Versteifungselement (41) eine mit den Durchbrüchen (44) versehene Grundplatte (70) aufweist, an die sich mit einem ersten Neigungswinkel schräg zur Grundplatte (70) verlaufende Übergangsbereiche (71, 72) anschließen, die in Randabschnitte (73, 74) übergehen, die einen zweiten Neigungswinkel, der geringer als der erste Neigungswinkel ist, aufweisen.

8. Fahrradrahmen (12, 20) nach einem der vorhergehenden Ansprüche, wobei mehrere zweite Versteifungselemente (42, 43, 60) als im Rohr (80) axial beabstandete hintereinander angeordnete Leisten ausgestaltet sind.

9. Fahrradrahmen (12, 20) nach Anspruch 8, wobei die mehreren im Rohr (80) axial beabstandeten hintereinander angeordneten Leisten nebeneinander verlaufende Leistenreihen bilden.

## Claims

1. Bicycle frame (12, 20) for an electric bicycle (10),
with a lower tube (14, 21) and a saddle tube (15, 24),
w herein the bicycle frame (12) is provided with a separate one-piece stiffening device (40) in the lower tube (14, 21) or in the saddle tube (15, 24), which stiffening device serves to stiffen the electric bicycle frame (12, 20) at least in the region of a tube cutout (22, 90), which region accommodates an energy store (17), of a bicycle frame tube (80),
w herein the stiffening device (40) is installed in the tube (80) of the bicycle frame (12, 20) and is provided with a first stiffening element (41), which extends axially in the tube (80), and with at least one second stiffening element (42, 43), which likewise extends axially in the tube (80; 100), at a specific angle to the first stiffening element (41),
w herein two mutually opposite mounts (82, 83) are provided in the tube (80) of the lower tube (14, 21) or of the saddle tube (15, 24),
the stiffening device (40) is connected to the adjacent tube wall of the tube (80) and substantially over the entire length of the stiffening device (40) in two axial lines, which are parallel to one another, with the mounts (82, 83).

2. Bicycle frame (12, 20) according to claim 1, wherein bores (84) and/or axially extending grooves (81) are recessed into the mounts (83, 82).

3. Bicycle frame (12, 20) according to one of the preceding claims, wherein longitudinal holes (110) are provided in the lower tube (14, 21) or in the saddle tube (15, 24).

4. Bicycle frame (12, 20) according to one of the preceding claims, wherein the first stiffening element (41) is provided with a plurality of apertures (44) and/or recesses (45, 46).

5. Bicycle frame (12, 20) according to claim 4, wherein the apertures (44) are rectangular, honeycomb-shaped or rhomb-shaped, wherein the rhomb-shaped apertures (44) are provided with four edges extending in a straight line, and arcuate edges are arranged between two edges extending in a straight line.

6. Bicycle frame (12, 20) according to claim 4 or 5, wherein the apertures (44) and the recesses (45, 46) are arranged offset from one another in the longitudinal direction of the first stiffening element (41).

7. Bicycle frame (12, 20) according to one of claims 4 to 6, wherein the first stiffening element (41) is provided with a base plate (70), which is provided with the apertures (44) and which is adjoined by transition regions (71, 72), which extend at a first angle of inclination obliquely with respect to the base plate (70) and which transition into edge sections (73, 74), which are provided with a second angle of inclination, which is smaller than the first angle of inclination.

8. Bicycle frame (12, 20) according to one of the preceding claims, wherein multiple second stiffening elements (42, 43, 60) are configured as strips, which are arranged axially spaced apart one behind the other in the tube (80).

9. Bicycle frame (12, 20) according to claim 8, wherein the multiple strips, which are arranged axially spaced apart one behind the other in the tube (80), form strip rows, which extend next to one another.

## Revendications

1. Cadre de bicyclette (12, 20) pour une bicyclette électrique (10),
comprenant un tube inférieur (14, 21) et un tube de selle (15, 24),
le cadre de bicyclette (12) étant pourvu d'un dispositif de rigidification (40) séparé d'une seule pièce dans le tube inférieur (14, 21) ou dans le tube de selle (15, 24), lequel dispositif de rigidification sert à rigidifier le cadre de bicyclette électrique (12, 20) au moins dans la région d'un évidement de tube (22, 90) d'un tube de cadre de bicyclette (80) recevant un accumulateur d'énergie (17),
le dispositif de rigidification (40) étant monté dans le tube (80) du cadre de bicyclette (12, 20) et étant pourvu d'un premier élément de rigidification (41) s'étendant axialement dans le tube (80) et d'au moins un deuxième élément de rigidification (42, 43) s'étendant également axialement dans le tube (80 ; 100) selon un angle déterminé par rapport au premier élément de rigidification (41),
deux logements (82, 83) opposés l'un à l'autre étant prévus dans le tube (80) du tube inférieur (14, 21) ou du tube de selle (15, 24),
le dispositif de rigidification (40) étant connecté à la paroi de tube adjacente du tube (80) et sensiblement sur toute la longueur du dispositif de rigidification (40) dans deux lignes axiales parallèles l'une à l'autre avec les logements (82, 83).

2. Cadre de bicyclette (12, 20) selon la revendication 1, des alésages (84) et/ou des rainures (81) s'étendant axialement étant enfoncés dans les logements (83, 82).

3. Cadre de bicyclette (12, 20) selon l'une des revendications précédentes, des trous longitudinaux (110) étant prévus dans le tube inférieur (14, 21) ou dans le tube de selle (15, 24).

4. Cadre de bicyclette (12, 20) selon l'une des revendications précédentes, le premier élément de renforcement (41) étant pourvu d'une pluralité d'ouvertures (44) et/ou d'évidements (45, 46).

5. Cadre de bicyclette (12, 20) selon la revendication 4, les ouvertures (44) étant rectangulaires, en forme de nid d'abeilles ou en forme de losange, les ouvertures (44) en forme de losange étant pourvues de quatre bords s'étendant en ligne droite et des bords en forme d'arc étant disposés entre deux bords s'étendant en ligne droite.

6. Cadre de bicyclette (12, 20) selon la revendication 4 ou 5, les ouvertures (44) et les évidements (45, 46) étant disposés de manière décalée les uns par rapport aux autres dans la direction longitudinale du premier élément de renforcement (41).

7. Cadre de bicyclette (12, 20) selon l'une des revendications 4 à 6, le premier élément de renforcement (41) étant pourvu d'une plaque de base (70) pourvue des ouvertures (44), à laquelle se raccordent des régions de transition (71, 72) s'étendant selon un premier angle d'inclinaison obliquement par rapport à la plaque de base (70), qui se transforment en portions de bord (73, 74) pourvues d'un deuxième angle d'inclinaison inférieur au premier angle d'inclinaison.

8. Cadre de bicyclette (12, 20) selon l'une des revendications précédentes, plusieurs deuxièmes éléments de rigidification (42, 43, 60) étant réalisés sous forme de bandes disposées axialement à distance les unes derrière les autres dans le tube (80).

9. Cadre de bicyclette (12, 20) selon la revendication 8, les multiples bandes disposées axialement à distance les unes derrière les autres dans le tube (80) formant des rangées de bandes s'étendant les unes à côté des autres.
